# EUROPEAN PATENT APPLICATION

(11) **EP 2 566 041 A2**
(43) Date of publication of application: **06.03.2013**
(21) Application number: 12177110.9
(22) Date of filing: 19.07.2012
(51) Int. Cl.: H02P 7/29

(54) **Motor control device, pump device, and liquid circulation device**

(30) Priority: 29.08.2011 JP 2011186453
(71) Applicant: Panasonic Corporation, Osaka 571-8501 (JP)
(72) Inventor: Ueda, Hidetoshi, Chuo-ku, Osaka 540-6207 (JP); Syukuri, Youichi, Chuo-ku, Osaka 540-6207 (JP)
(74) Representative: Appelt, Christian W.

(57) **Abstract**

The motor control device includes a pipe resistance detection unit configured to measure a pipe resistance, a motor voltage control unit, a motor control unit, a motor voltage instruction unit, and a duty ratio instruction unit. The motor voltage instruction unit and the duty ratio instruction unit have pluralities of instruction values respectively associated with pluralities of pipe resistances, and select the pipe resistances corresponding to the pipe resistance measured by the pipe resistance detection unit and output the instruction values corresponding to the selected pipe resistances to the motor voltage control unit and the motor control unit, respectively. The motor voltage control unit adjusts a voltage of a series of pulses outputted to a motor to a value corresponding to the instruction value from the motor voltage instruction unit. The motor control unit adjusts the duty ratio of the series of pulses to a value corresponding to the instruction value from the duty ratio instruction unit.

## Description

### Technical Field

The present invention relates to motor control devices, pump devices, and liquid circulation devices.

### Background Art

With regard to an instance where a pump is interposed in a circulation path including a plurality of pipe channels connected in parallel with each other and each of the pipe channels is opened and closed by use of a corresponding valve, a pipe resistance is varied with opening and/or closing the valves of the respective pipe channels.

In view of the above instance, for the purpose of improving the pump efficiency, the document 1 (JP 2004-232607 A) discloses a technique of obtaining a change in a flow rate derived from a current flowing through a motor for driving a pump and controlling pump output depending on a change in the current. When the motor current is low, the flow rate is considered to be low and then the pump output is decreased so as to lower a lifting height of the pump. Consequently, it is possible to control the flow rate in accordance with a change in the pipe resistance caused by manipulation of the valve provided to the pipe. As a result, an excess pressure loss in the pump can be suppressed, and it is possible to downsize the pump and to conserve energy.

However, according to the device disclosed in the document 1, a processing circuit (e.g., a microcomputer) is necessary. However, such a processing circuit is very expensive. Moreover, such a device has an excessively higher performance than necessary for a situation where pipe resistances of the respective pipe channels connected to the pump are known.

### Disclosure of Invention

In view of the above insufficiency, the present invention has been aimed to propose a motor control device, a pump device, and a liquid circulation device capable of easily adjusting of pump output in accordance with one of known pipe resistances.

The motor control device of the first aspect in accordance with the present invention includes a motor driving unit and a pipe resistance detection unit. The motor driving unit is configured to output a series of pulses to a motor designed to drive a pump mechanism for moving a fluid through a pipe so as to implement PWM control of the motor. The pipe resistance detection unit is configured to measure a pipe resistance of the pipe. The motor driving unit includes a motor voltage control unit, a motor control unit, a motor voltage instruction unit, and a duty ratio instruction unit. The motor voltage control unit is configured to control a voltage of the series of pulses. The motor control unit is configured to control a duty ratio of the series of pulses. The motor voltage instruction unit has a plurality of first instruction values respectively associated with a plurality of first pipe resistances different from each other. The motor voltage instruction unit is configured to select the first pipe resistance corresponding to the pipe resistance measured by the pipe resistance detection unit from the plurality of the first pipe resistances and output the first instruction value corresponding to the selected first pipe resistance to the motor voltage control unit. The duty ratio instruction unit has a plurality of second instruction values respectively associated with a plurality of second pipe resistances different from each other. The duty ratio instruction unit is configured to select the second pipe resistance corresponding to the pipe resistance measured by the pipe resistance detection unit from the plurality of the second pipe resistances and output the second instruction value corresponding to the selected second pipe resistance to the motor control unit. The motor voltage control unit is configured to adjust the voltage of the series of pulses to a value corresponding to the first instruction value received from the motor voltage instruction unit. The motor control unit is configured to adjust the duty ratio of the series of pulses to a value corresponding to the second instruction value received from the duty ratio instruction unit.

In the motor control device of the second aspect in accordance with the present embodiment, in addition to the first aspect, the motor voltage instruction unit has a plurality of first pipe resistance ranges respectively associated with the plurality of the first pipe resistances. The motor voltage instruction unit is configured to select the first pipe resistance corresponding to the pipe resistance measured by the pipe resistance detection unit from the plurality of the first pipe resistances on the basis of which one of the plurality of the first pipe resistance ranges includes the pipe resistance measured by the pipe resistance detection unit.

In the motor control device of the third aspect in accordance with the present embodiment, in addition to the second aspect, the motor voltage instruction unit includes a first judging circuit configured to judge which one of the plurality of the first pipe resistance ranges includes the pipe resistance measured by the pipe resistance detection unit. The first judging circuit is constituted by a plurality of first comparison circuits respectively configured to compare the pipe resistance measured by the pipe resistance detection unit with a threshold defining the first pipe resistance range.

In the motor control device of the fourth aspect in accordance with the present embodiment, in addition to any one of the first to third aspects, the duty ratio instruction unit has a plurality of second pipe resistance ranges respectively associated with the plurality of the second pipe resistances. The duty ratio instruction unit is configured to select the second pipe resistance corresponding to the pipe resistance measured by the pipe resistance detection unit from the plurality of the second pipe resistances on the basis of which one of the plurality of the second pipe resistance ranges includes the pipe resistance measured by the pipe resistance detection unit.

In the motor control device of the fifth aspect in accordance with the present embodiment, in addition to the fourth aspect, the duty ratio instruction unit includes a second judging circuit configured to judge which one of the plurality of the second pipe resistance ranges includes the pipe resistance measured by the pipe resistance detection unit. The second judging circuit is constituted by a plurality of second comparison circuits respectively configured to compare the pipe resistance measured by the pipe resistance detection unit with a threshold defining the second pipe resistance range.

In the motor control device of the sixth aspect in accordance with the present embodiment, in addition to any one of the first to fifth aspects, the pipe resistance detection unit includes a current measurement circuit configured to measure a current flowing through the motor. The pipe resistance detection unit is configured to output, as the measured pipe resistance, the current measured by the current measurement circuit.

In the motor control device of the seventh aspect in accordance with the present embodiment, in addition to the sixth aspect, the pipe resistance detection unit includes a current smoothing circuit configured to smooth a current flowing through the motor.

In the motor control device of the eighth aspect in accordance with the present embodiment, in addition to any one of the first to seventh aspects, the motor voltage instruction unit includes a first output circuit configured to output an electric signal indicative of the first instruction value to the motor voltage control unit, and a first time constant circuit configured to smooth the electric signal outputted from the first output circuit.

In the motor control device of the ninth aspect in accordance with the present embodiment, in addition to any one of the first to eighth aspects, the duty ratio instruction unit includes a second output circuit configured to output an electric signal indicative of the second instruction value to the motor control unit, and a second time constant circuit configured to smooth the electric signal outputted from the second output circuit.

The pump device in accordance with the present invention includes a pump mechanism configured to move a fluid through a pipe, a motor configured to drive the pump mechanism, and a motor control device defined by any one of the first to ninth aspects.

The liquid circulation device in accordance with the present invention includes a pipe designed to constitute a circulation path, and the above-identified pump device.

### Brief Description of Drawings

FIG. 1 is a block diagram illustrating a pump device of the first embodiment,
FIG. 2 is a schematic view illustrating a liquid circulation device including the pump device of the first embodiment,
FIG. 3 is a flow chart illustrating operation of motor voltage control of the pump device of the first embodiment,
FIG. 4 is a flow chart illustrating operation of PWM control of the pump device of the first embodiment,
FIG. 5 is an explanation view illustrating operation of the pump device of the first embodiment,
FIG. 6 is an explanation view illustrating operation of the pump device of the first embodiment,
FIG. 7 is a perspective view illustrating the pump device of the first embodiment,
FIG. 8 is a block diagram illustrating a pump device of the second embodiment,
FIG. 9 is a block diagram illustrating a pump device of the third embodiment, and
FIG. 10 is a block diagram illustrating a pump device of the fourth embodiment.

### Best mode for Carrying out the Invention

### (FIRST EMBODIMENT)

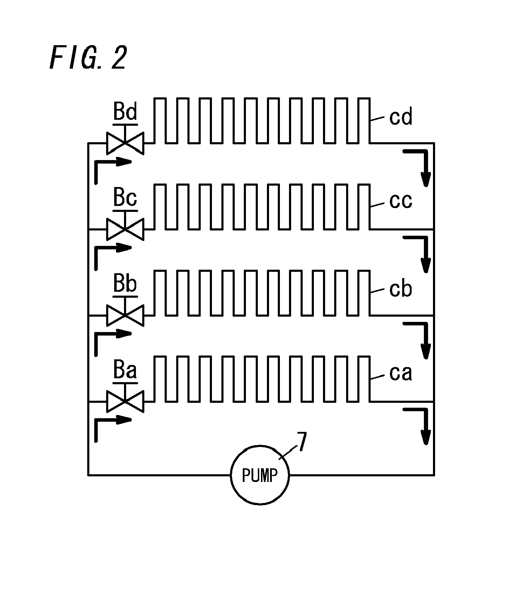

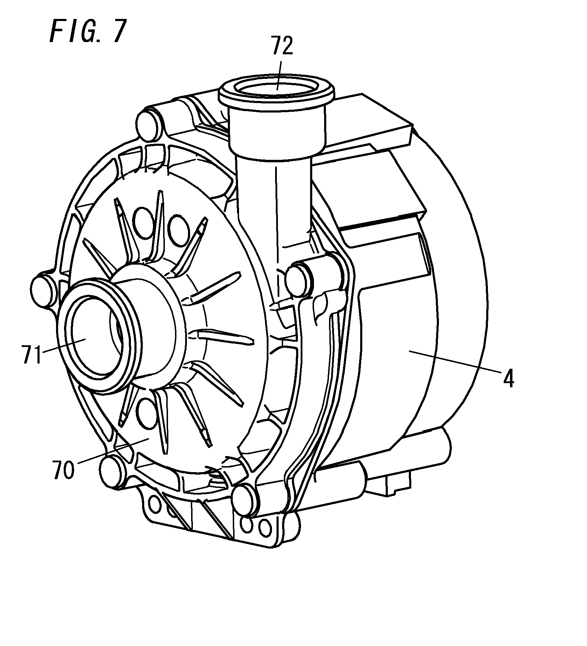

The following explanation referring to drawings is made to a pump device **70** (see FIG. 7) of the first embodiment in accordance with the present invention. FIG. 2 shows a liquid circulation device in accordance with the present embodiment. The liquid circulation device illustrated in FIG. 2 includes a liquid circulation path (pipes ca, cb, cc, and cd) and the pump device **70** including a pump (pump mechanism) **7.**

In the liquid circulation device, the pump (pump mechanism) **7** is interposed in the circulation path (liquid circulation path) including a plurality of pipes (pipe channels) **ca, cb, cc,** and **cd** connected in parallel with each other. Individually operable valves **Ba, Bb, Bc,** and **Bd** are provided to the respective pipe channels **ca, cb, cc,** and **cd.** With opening and closing each of the valves **Ba, Bb, Bc,** and **Bd,** the pipe channels **ca, cb, cc,** and **cd** connected to the pump **7** are changed, and therefore a pipe resistance is varied.

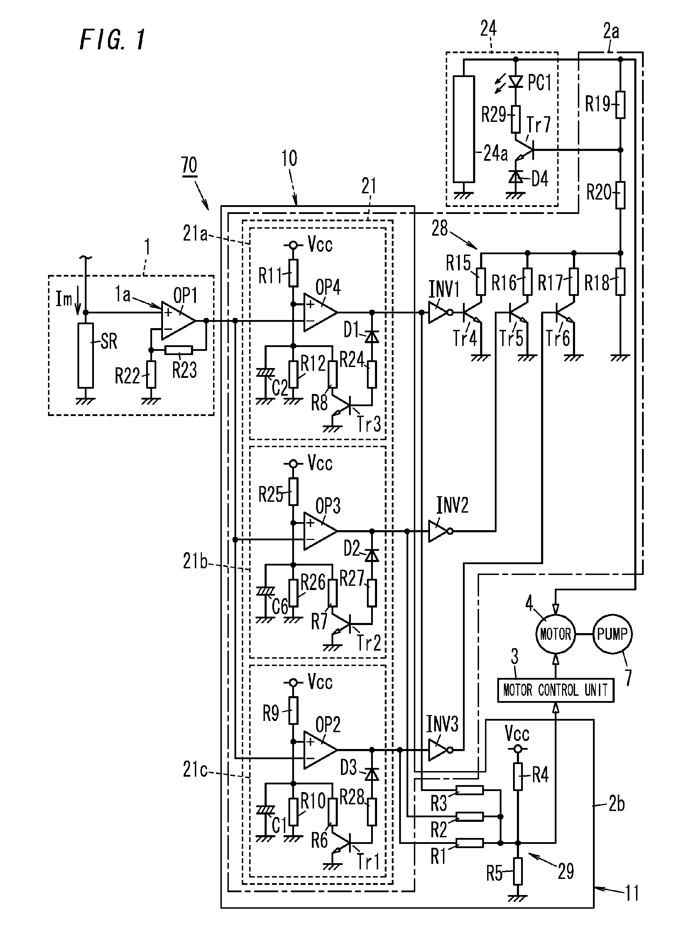

As shown in FIG. 1, the pump device **70** in accordance with the present embodiment includes a pipe resistance detection unit 1, a motor voltage instruction unit **2a,** a motor voltage control unit **24,** a duty ratio instruction unit **2b,** a motor control unit **3,** a motor **4,** and the pump (pump mechanism) **7.** The pipe resistance detection unit **1** is configured to measure a variation of the above pipe resistance. The motor voltage instruction unit **2a** is configured to compare a voltage outputted from the pipe resistance detection unit **1** with a prescribed voltage and create an output signal. The motor voltage control unit **24** is configured to create a motor voltage determined by the output signal created by the motor voltage instruction unit **2a** and apply the created motor voltage to the motor **4.** The duty ratio instruction unit **2b** is configured to compare a voltage outputted from the pipe resistance detection unit **1** with a prescribed voltage and create an instruction voltage **(Vda, Vdb, Vdc, Vdd)** for designating a duty ratio **(dca, dcb, dcc, dcd)** for PWM control. The motor control unit **3** is configured to decide the duty ratio **(dca, dcb, dcc, dcd)** based on a voltage outputted from the duty ratio instruction unit **2b** and implement the PWM control of the motor **4.** The motor control unit **3** is configured to control the motor **4** such that the motor **4** rotates. The pump **7** is rotated by the motor **4,** thereby moving a liquid through the circulation path (the pipes **ca, cb, cc,** and **cd).** The reference numeral **21** in drawings designates a common circuit shared by the motor voltage instruction unit **2a** and the duty ratio instruction unit **2b.**

In brief, the pump device **70** includes the pump mechanism **7** configured to move a fluid through the pipe **(ca, cb, cc, cd),** the motor **4** configured to drive the pump **7,** and a motor control device (motor control device for pumps) **10** configured to implement the PWM control of the motor **4.** The motor control device **10** includes a motor driving unit 11 and the pipe resistance detection unit 1.

FIG. 7 shows an instance of the pump device **70** including the motor **4.** For example, the pump device **70** is a canned motor pump, and incorporates an impeller (pump mechanism **7)** not shown. The impeller is rotated by the motor **4.** The pump device **70** suctions a fluid via an inlet **71** arranged along an axial direction of a rotation center of the impeller, and discharges the suctioned fluid via an outlet **72** positioned in an outer periphery of the impeller.

The pipe resistance detection unit **1** is configured to measure a pipe resistance of the pipe **(ca, cb, cc, cd).** In the present embodiment, the pipe resistance detection unit **1** includes a current measurement circuit configured to measure a current (motor current) **Im** flowing through the motor **4,** and is configured to output, as the measured pipe resistance, the current **Im** measured by the current measurement circuit, to the motor voltage instruction unit **2a** and the duty ratio instruction unit **2b.** In brief, in the present embodiment, adopted as the pipe resistance detection unit **1** is a current detection unit configured to convert the current **Im** of the motor **4** for driving the pump **7** into a voltage. The pipe resistance detection unit **1** of the present embodiment outputs a voltage indicative of the pipe resistance.

For example, as shown in FIG. 1, the pipe resistance detection unit **1** includes a shunt resistor **SR** as the current measurement circuit. Further, the pipe resistance detection unit 1 includes an amplification circuit **la** configured to amplify an output of the current measurement circuit. The amplification unit **la** is constituted by an operational amplifier **OP1** and resistors **R22** and **R23.**

The motor driving unit **11** is configured to output a series of pulses to the motor **4** designed to drive the pump mechanism **7** for moving a fluid through the pipe so as to implement the PWM control of the motor **4.**

The motor driving unit **11** includes the motor voltage control unit **24,** the motor control unit **3,** the motor voltage instruction unit **2a,** and the duty ratio instruction unit **2b.**

The motor voltage control unit **24** is configured to control a voltage of the series of pulses. The motor voltage control unit **24** is configured to adjust the voltage of the series of pulses to a value corresponding to an instruction value (first instruction value) received from the motor voltage instruction unit **2a.**

For example, as shown in FIG. 1, the motor voltage control unit **24** includes a switching power supply unit **24a** configured to apply a voltage to the motor **4.** In the present embodiment, the voltage (output voltage) outputted from the switching power supply unit **24a** defines the voltage of the series of pulses.

Further, the motor voltage control unit **24** includes a light emitting diode **PC1,** a resistor **R29,** a transistor **Tr7,** and a diode **D4.** The switching power supply unit **24a** includes a light receiving element (e.g., a phototransistor) not shown. The switching power supply unit **24a** is configured to output a voltage corresponding to an intensity of light received by the light receiving element. The light emitting diode **PC1** constitutes a photo coupler in combination with the light receiving element of the switching power supply unit **24a.** The light emitting diode **PC1** has its anode connected to an output terminal of the switching power supply unit **24a.** The light emitting diode **PC1** has its cathode grounded via the resistor **R29,** the transistor **Tr7,** and the diode **D4.** The transistor **Tr7** has its base connected to an output terminal of the motor voltage instruction unit **2a.** Consequently, the intensity of light emitted from the light emitting diode **PC1** varies depending on the instruction value (first instruction value) outputted from the motor voltage instruction unit **2a,** and therefore the voltage outputted from the switching power supply unit **24a** is varied.

The motor control unit **3** is configured to control a duty ratio of the series of pulses. The motor control unit **3** is configured to adjust the duty ratio of the series of pulses to a value corresponding to an instruction value (second instruction value) received from the duty ratio instruction unit **2b.**

The motor voltage instruction unit **2a** has a plurality of the instruction values (first instruction values) respectively associated with a plurality of the pipe resistances (first pipe resistances) different from each other. The motor voltage instruction unit **2a** is configured to select the first pipe resistance corresponding to the pipe resistance (hereinafter referred to as "measurement value", if necessary) measured by the pipe resistance detection unit 1 from the plurality of the first pipe resistances and output the first instruction value corresponding to the selected first pipe resistance to the motor voltage control unit **24.**

In the present embodiment, the motor voltage instruction unit **2a** has the four first instruction values respectively associated with the four first pipe resistances. The four first pipe resistances include the pipe resistances **PRa, PRb, PRc,** and **PRd.** The pipe resistance **PRa** is defined as a pipe resistance (the pipe resistance of the pipe **ca)** in a situation where the valve **Ba** is opened and the remaining valves **Bb, Bc,** and **Bd** are closed. The pipe resistance **PRb** is defined as a pipe resistance (the combined pipe resistance of the pipes **ca** and **cb)** in a situation where the valves **Ba** and **Bb** are opened and the remaining valves **Bc** and **Bd** are closed. The pipe resistance **PRc** is defined as a pipe resistance (the combined pipe resistance of the pipes **ca, cb,** and **cc)** in a situation where the valves **Ba, Bb,** and **Bc** are opened and the remaining valve **Bd** is closed. The pipe resistance **PRd** is defined as a pipe resistance (the combined pipe resistance of the pipes **ca, cb, cc,** and **cd)** in a situation where all the valves **Ba, Bb, Bc,** and **Bd** are opened.

Moreover, in the present embodiment, the motor voltage instruction unit **2a** has a plurality of pipe resistance ranges (first pipe resistance ranges) respectively associated with the plurality of the pipe resistances (first pipe resistances). The motor voltage instruction unit **2a** is configured to select the first pipe resistance corresponding to the pipe resistance measured by the pipe resistance detection unit 1 from the plurality of the first pipe resistances on the basis of which one of the plurality of the first pipe resistance ranges includes the pipe resistance measured by the pipe resistance detection unit 1.

In the present embodiment, the motor voltage instruction unit **2a** has the four first pipe resistance ranges (current variation ranges) **Wa, Wb, Wc,** and **Wd** respectively associated with the four first pipe resistances **PRa, PRb, PRc,** and **PRd.**

Especially, the motor voltage instruction unit **2a** of the present embodiment includes a judging circuit (first judging circuit) **21** and an output circuit (first output circuit) **28.**

The first judging circuit **21** is configured to judge which one of the plurality of the first pipe resistance ranges **Wa, Wb, Wc,** and **Wd** includes the pipe resistance (measurement value) measured by the pipe resistance detection unit 1.

The first judging circuit **21** is constituted by a plurality of comparison circuits (first comparison circuits) **21a, 21b,** and **21c** respectively configured to compare the pipe resistance measured by the pipe resistance detection unit **1** with a threshold defining the first pipe resistance range.

The comparison circuit **21a** is configured to compare the pipe resistance (measurement value) measured by the pipe resistance detection unit **1** with a threshold **cH** defining an upper limit of the first pipe resistance range **Wc.** Further, the comparison circuit **21a** is configured to compare the measurement value with a threshold **dL** defining a lower limit of the first pipe resistance range **Wd,** once the first judging circuit **21** judges that the measurement value is included in the first pipe resistance range **Wd.**

As shown in FIG. 1, the comparison circuit **21a** is constituted by an operational amplifier **OP4,** a capacitor **C2,** resistors **R8, R11, R12** and **R24,** a transistor **Tr3,** and a diode **D1.** The operational amplifier **OP4** has its inverting input terminal connected to an output terminal of the operational amplifier **OP1.** Therefore, the operational amplifier **OP4** receives the measurement value at its inverting input terminal. The operational amplifier **OP4** receives the threshold **cH** or **dL** at its non-inverting input terminal.

The resistors **R8, R11,** and **R12** constitute a voltage-dividing circuit connected to an internal voltage source **Vcc,** and this voltage-dividing circuit provides the threshold **cH** to the non-inverting input terminal of the operational amplifier **OP4.** In this instance, upon acknowledging that the measurement value is less than the threshold **cH,** the operational amplifier **OP4** outputs a high-level signal. Upon acknowledging that the measurement value is not less than the threshold **cH,** the operational amplifier **OP4** outputs a low-level signal. A voltage-dividing circuit of the resistors **R11** and **R12** connected to the internal power source **Vcc** provides the threshold **dL** to the non-inverting input terminal of the operational amplifier **OP4.** In this instance, upon acknowledging that the measurement value is less than the threshold **dL,** the operational amplifier **OP4** outputs a high-level signal. Upon acknowledging that the measurement value is not less than the threshold **dL,** the operational amplifier **OP4** outputs a low-level signal.

The comparison circuit **21b** is configured to compare the pipe resistance (measurement value) measured by the pipe resistance detection unit **1** with a threshold **bH** defining an upper limit of the first pipe resistance range **Wb.** Further, the comparison circuit **21b** is configured to compare the measurement value with a threshold **cL** defining a lower limit of the first pipe resistance range **Wc,** once the first judging circuit **21** judges that the measurement value is included in the first pipe resistance range **Wc.**

As shown in FIG. 1, the comparison circuit **21b** is constituted by an operational amplifier **OP3,** a capacitor **C6,** resistors **R7, R25, R26** and **R27,** a transistor **Tr2,** and a diode **D2.** The operational amplifier **OP3** has its inverting input terminal connected to the output terminal of the operational amplifier **OP1.** Therefore, the operational amplifier **OP3** receives the measurement value at its inverting input terminal. The operational amplifier **OP3** receives the threshold **bH** or **cL** at its non-inverting input terminal.

The resistors **R7, R25,** and **R26** constitute a voltage-dividing circuit connected to the internal voltage source **Vcc,** and this voltage-dividing circuit provides the threshold **bH** to the non-inverting input terminal of the operational amplifier **OP3.** In this instance, upon acknowledging that the measurement value is less than the threshold **bH,** the operational amplifier **OP3** outputs a high-level signal. Upon acknowledging that the measurement value is not less than the threshold **bH,** the operational amplifier **OP3** outputs a low-level signal. A voltage-dividing circuit of the resistors **R25** and **R26** connected to the internal power source **Vcc** provides the threshold **cL** to the non-inverting input terminal of the operational amplifier **OP3.** In this instance, upon acknowledging that the measurement value is less than the threshold **cL,** the operational amplifier **OP3** outputs a high-level signal. Upon acknowledging that the measurement value is not less than the threshold cL, the operational amplifier **OP3** outputs a low-level signal.

The comparison circuit **21c** is configured to compare the pipe resistance (measurement value) measured by the pipe resistance detection unit **1** with a threshold **aH** defining an upper limit of the first pipe resistance range **Wa.** Further, the comparison circuit **21c** is configured to compare the measurement value with a threshold **bL** defining a lower limit of the first pipe resistance range **Wb,** once the first judging circuit **21** judges that the measurement value is included in the first pipe resistance range **Wb.**

As shown in FIG. 1, the comparison circuit **21c** is constituted by an operational amplifier **OP2,** a capacitor **C1,** resistors **R6, R9, R10** and **R28,** a transistor **Tr1,** and a diode **D3.** The operational amplifier **OP2** has its inverting input terminal connected to the output terminal of the operational amplifier **OP1.** Therefore, the operational amplifier **OP2** receives the measurement value at its inverting input terminal. The operational amplifier **OP2** receives the threshold **aH** or **bL** at its non-inverting input terminal.

The resistors **R6, R9,** and **R10** constitute a voltage-dividing circuit connected to the internal voltage source **Vcc,** and this voltage-dividing circuit provides the threshold **aH** to the non-inverting input terminal of the operational amplifier **OP2.** In this instance, upon acknowledging that the measurement value is less than the threshold **aH,** the operational amplifier **OP2** outputs a high-level signal. Upon acknowledging that the measurement value is not less than the threshold **aH,** the operational amplifier **OP2** outputs a low-level signal. A voltage-dividing circuit of the resistors **R9** and **R10** connected to the internal power source **Vcc** provides the threshold **bL** to the non-inverting input terminal of the operational amplifier **OP2.** In this instance, upon acknowledging that the measurement value is less than the threshold **bL,** the operational amplifier **OP2** outputs a high-level signal. Upon acknowledging that the measurement value is not less than the threshold **bL,** the operational amplifier **OP2** outputs a low-level signal.

The first output circuit **28** is configured to output an electric signal (a voltage signal in the present embodiment) indicative of the first instruction value to the motor voltage control unit **24.** In other words, the first output circuit **28** provides the electric signal indicative of the first instruction value depending on a judgment result of the first judging circuit **21** to the base of the transistor **Tr7** of the motor voltage control unit **24.**

In the present embodiment, the first output circuit **28** is constituted by inverters **INV1, INV2** and **INV3,** transistors **Tr4, Tr5** and **Tr6,** and resistors **R15, R16, R17, R18, R19** and **R20.**

The resistors **R18, R19,** and **R20** are connected in series with each other and are interposed between the output terminal of the switching power supply unit **24a** and a ground. Connected to the base of the transistor **Tr7** is a connection point of the resistors **R19** and **R20.** In brief, the connection point of the resistors **R19** and **R20** is used as an output terminal of the motor voltage instruction unit **2a.** Connected in parallel with the resistor **R18** are a series circuit of the resistor **R15** and the transistor **Tr4,** a series circuit of the resistor **R16** and the transistor **Tr5,** and a series circuit of the resistor **R17** and the transistor **Tr6.**

The inverter **INV1** is interposed between an output terminal of the operational amplifier **OP4** and a base of the transistor **Tr4,** and is configured to invert an output signal of the operational amplifier **OP4** and then provide the inverted output signal to the base of the transistor **Tr4.** The inverter **INV2** is interposed between an output terminal of the operational amplifier **OP3** and a base of the transistor **Tr5,** and is configured to invert an output signal of the operational amplifier **OP3** and then provide the inverted output signal to the base of the transistor **Tr5.** The inverter **INV3** is interposed between an output terminal of the operational amplifier **OP2** and a base of the transistor **Tr6,** and is configured to invert an output signal of the operational amplifier **OP2** and then provide the inverted output signal to the base of the transistor **Tr6.**

When all the transistors **Tr4, Tr5,** and **Tr6** are turned off, the first output circuit **28** outputs the first instruction value (output signal) corresponding to the first pipe resistance range **Wa** (the first pipe resistance **PRa)** to the motor voltage control unit **24.** When the transistors **Tr4** is turned on and the remaining transistors **Tr5** and **Tr6** are turned off, the first output circuit **28** outputs the first instruction value (output signal) corresponding to the first pipe resistance range **Wb** (the first pipe resistance **PRb)** to the motor voltage control unit **24.** When the transistors **Tr4** and **Tr5** are turned on and the remaining transistor **Tr6** is turned off, the first output circuit **28** outputs the first instruction value (output signal) corresponding to the first pipe resistance range **Wc** (the first pipe resistance **PRc)** to the motor voltage control unit **24.** When all the transistors **Tr4, Tr5,** and **Tr6** are turned on, the first output circuit **28** outputs the first instruction value (output signal) corresponding to the first pipe resistance range **Wd** (the first pipe resistance **PRd)** to the motor voltage control unit **24.**

Upon receiving the first instruction value (output signal) corresponding to the first pipe resistance **PRa,** the motor voltage control unit **24** adjusts the output voltage of the motor voltage control unit **24** to the motor voltage **Va.** Upon receiving the first instruction value (output signal) corresponding to the first pipe resistance **PRb,** the motor voltage control unit **24** adjusts the output voltage of the motor voltage control unit **24** to the motor voltage **Vb.** Upon receiving the first instruction value (output signal) corresponding to the first pipe resistance **PRc,** the motor voltage control unit **24** adjusts the output voltage of the motor voltage control unit **24** to the motor voltage **Vc.** Upon receiving the first instruction value (output signal) corresponding to the first pipe resistance **PRd,** the motor voltage control unit **24** adjusts the output voltage of the motor voltage control unit **24** to the motor voltage **Vd.**

In the present embodiment, the duty ratio instruction unit **2b** has the four second instruction values respectively associated with the four second pipe resistances. The four second pipe resistances include the pipe resistances **PRa, PRb, PRc,** and **PRd.**

Moreover, in the present embodiment, the duty ratio instruction unit **2b** has a plurality of pipe resistance ranges (second pipe resistance ranges) respectively associated with the plurality of the pipe resistances (second pipe resistances). The duty ratio instruction unit **2b** is configured to select the second pipe resistance corresponding to the pipe resistance measured by the pipe resistance detection unit **1** from the plurality of the second pipe resistances on the basis of which one of the plurality of the second pipe resistance ranges includes the pipe resistance measured by the pipe resistance detection unit **1.**

In the present embodiment, the duty ratio instruction unit **2b** has the four second pipe resistance ranges (current variation ranges) **Wa, Wb, Wc,** and **Wd** respectively associated with the four second pipe resistances **PRa, PRb, PRc,** and **PRd.**

Especially, the duty ratio instruction unit **2b** of the present embodiment includes the judging circuit (second judging circuit) **21** and an output circuit (second output circuit) **29.**

In the present embodiment, the second pipe resistances are identical to the respective first resistances, and the second pipe resistance ranges are identical to the respective second pipe resistance ranges.

In brief, the motor voltage instruction unit **2a** and the duty ratio instruction unit **2b** share the judging circuit **21.** In other words, the judging circuit **21** is a common circuit common to the motor voltage instruction unit **2a** and the duty ratio instruction unit **2b.**

The second time constant circuit **29** is configured to output an electric signal (a voltage signal in the present embodiment) indicative of the second instruction value to the motor control unit **3.** In other words, the second time constant circuit **29** provides the electric signal indicative of the second instruction value depending on the judgment result of the second judging circuit **21** to the motor control unit **3.**

In the present embodiment, the second time constant circuit **29** is constituted by resistors **R1, R2, R3, R4,** and **R5.** The resistors **R4** and **R5** are connected in series with each other and are interposed between the internal power source **Vcc** and the ground. Connected to the motor control unit **3** is a connection point of the resistors **R4** and **R5.** In brief, the connection point of the resistors **R4** and **R5** is used as an output terminal of the duty ratio instruction unit **2b.** The resistor **R3** is interposed between the output terminal of the operational amplifier **OP4** and the connection point of the resistors **R4** and **R5.** The resistor **R2** is interposed between the output terminal of the operational amplifier **OP3** and the connection point of the resistors **R4** and **R5.** The resistor **R1** is interposed between the output terminal of the operational amplifier **OP2** and the connection point of the resistors **R4** and **R5.**

When the output signals of all the operational amplifiers **OP2, OP3,** and **OP4** are high-level signals, the second time constant circuit **29** outputs the second instruction value (duty ratio instruction voltage **Vda)** corresponding to the second pipe resistance range **Wa** (the second pipe resistance **PRa)** to the motor control unit **3.** When the output signal of the operational amplifier **OP2** is a low-level signal and the output signals of the remaining operational amplifiers **OP3** and **OP4** are high-level signals, the second time constant circuit **29** outputs the second instruction value (duty ratio instruction voltage **Vdb)** corresponding to the second pipe resistance range **Wb** (the second pipe resistance **PRb)** to the motor control unit **3.** When the output signals of the operational amplifiers **OP2** and **OP3** are low-level signals and the output signal of the remaining operational amplifier **OP4** is a high-level signal, the second time constant circuit **29** outputs the second instruction value (duty ratio instruction voltage **Vdc)** corresponding to the second pipe resistance range **Wc** (the second pipe resistance **PRc)** to the motor control unit **3.** When the output signals of all the operational amplifiers **OP2, OP3,** and **OP4** are low-level signals, the second time constant circuit **29** outputs the second instruction value (duty ratio instruction voltage **Vdd)** corresponding to the second pipe resistance range **Wd** (the second pipe resistance **PRd)** to the motor control unit **3.**

Upon receiving the second instruction value (duty ratio instruction voltage **Vda)** corresponding to the second pipe resistance **PRa,** the motor control unit **3** adjusts the duty ratio to the duty ratio **dca.** Upon receiving the second instruction value (duty ratio instruction voltage **Vdb)** corresponding to the second pipe resistance **PRb,** the motor control unit **3** adjusts the duty ratio to the duty ratio **dcb.** Upon receiving the second instruction value (duty ratio instruction voltage **Vdc)** corresponding to the second pipe resistance **PRc,** the motor control unit **3** adjusts the duty ratio to the duty ratio **dcc.** Upon receiving the second instruction value (duty ratio instruction voltage **Vdd)** corresponding to the second pipe resistance **PRd,** the motor control unit **3** adjusts the duty ratio to the duty ratio **dcd.**

The following explanation is made to operation of the motor control device 10 of the present embodiment.

The motor current **Im** is converted into a corresponding voltage by means of the shunt resistor **SR,** and then is amplified by the operational amplifier **OP1,** and subsequently is outputted to the common circuit (judging circuit) **21** including the plurality of current variation range upper and lower limits determination circuits (comparison circuits) **21a, 21b,** and **21c.**

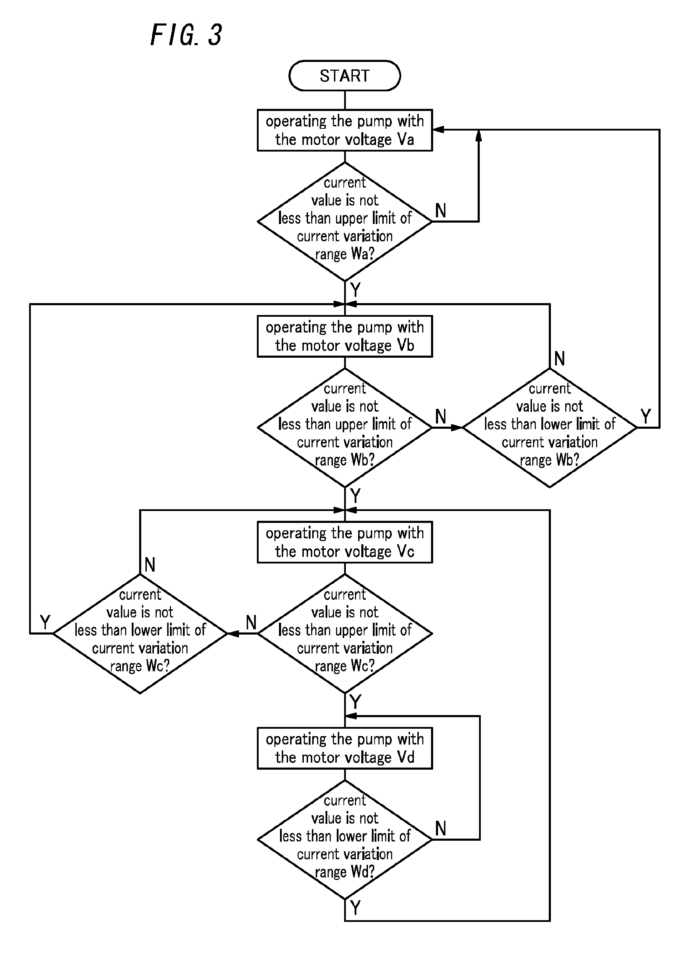

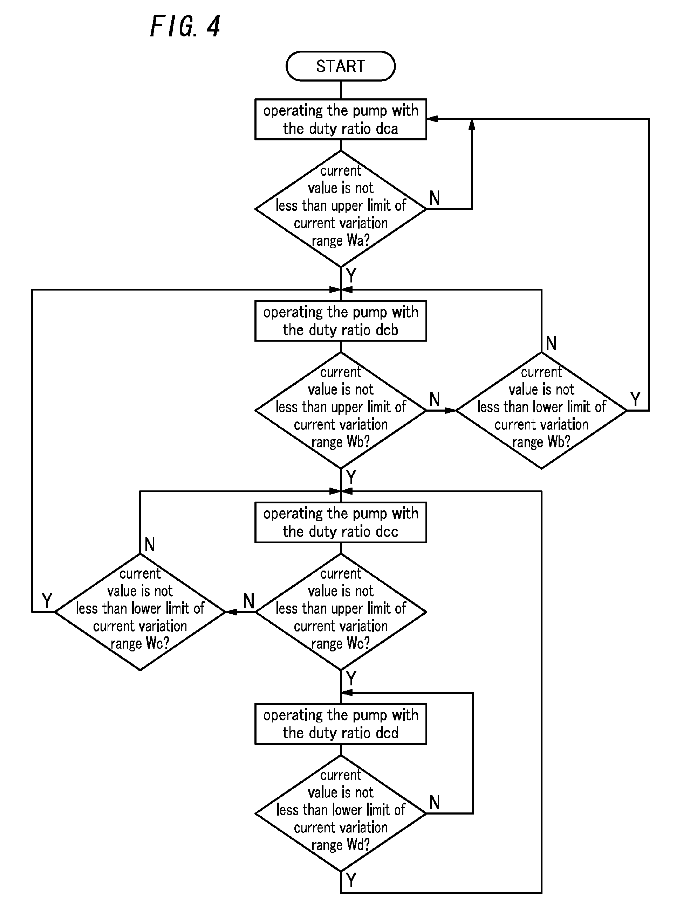

In the following explanation, an initial condition is defined as a condition where all the valves **Ba** to **Bd** are closed. First, the valve **Ba** is opened and then the pump **7** is activated. FIG. 3 shows a flow chart illustrating voltage control and FIG. 4 shows a flow chart illustrating the PWM control.

Prior to activation of the pump 7, the shunt resistor **SR** receives no electric current. The voltage outputted from the pipe resistance detection unit (current detection unit) **1** is zero. In this situation, all the operational amplifier **OP2** to **OP3** of the respective current variation range upper and lower limits determination circuits **21a, 21b,** and **21c** in the common circuit **21** provide high-level signals. The inverters **INV1** to **INV3** invert the respective high-level signals and provide their low-level signals to the respective transistors **Tr4** to **Tr6,** and therefore the transistors **Tr4** to **Tr6** are turned off. Consequently, the resistors **R15** to **R17** are separated from the GND (ground).

Thus, a voltage corresponding to a voltage-dividing ratio given by the resistors **R18** to **R20** is applied to the base terminal (base) of the transistor **Tr7** of the motor voltage control unit **24.** Consequently, the transistor **Tr7** is turned on, and then the photo coupler (light emitting diode) **PC1** emits light. Thereby, a signal corresponding to the voltage-dividing ratio is fed back to the switching power supply unit **24a,** and the motor voltage control unit **24** applies the predetermined motor voltage **Va** to the motor **4.** As a result, the predetermined motor voltage **Va** corresponding to this voltage-dividing ratio is outputted.

Further, all the resistors **R1, R2,** and **R3** respectively connected to the output terminals of the operational amplifiers **OP2** to **OP4** are pulled up, and the duty ratio instruction voltage **Vda** divided with the resistors **R4** and **R5** is outputted from the duty ratio instruction unit **2b** to the motor control unit **3.** Consequently, the motor control unit **3** implements the PWM control of the motor **4** based on the minimum duty ratio **dca** associated with the instruction voltage **Vda.**

In this situation, all the transistors **Tr1** to **Tr 3** in the respective current variation range upper and lower limits determination circuits (comparison circuits) **21a, 21b,** and **21c** are turned on. Further, the resistors **R6** to **R8** interposed between the collectors of the respective transistors **Tr1** to **Tr3** and plus input terminals (non-inverting input terminals) of the respective operational amplifiers **OP2** to **OP4** are connected to the GND (ground). Thus, the voltage-dividing circuits including the respective resistors **R6** to **R8** provide their divided voltage to the plus input terminals of the respective operational amplifiers **OP2** to **OP4.**

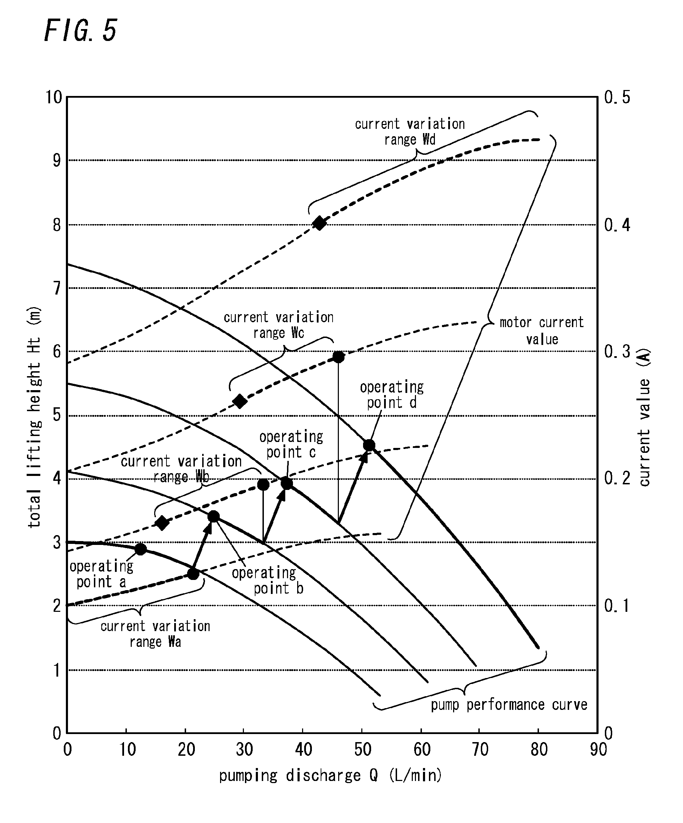

Thus, while the pump **7** operates at an operating point a, the pipe resistance is varied when the valve **Bb** is opened. Thus, the motor current reaches the upper limit of the current variation range **Wa** shown in FIG. 5. The output voltage of the operational amplifier **OP1** is increased and therefore a minus input terminal voltage (voltage applied to the inverting input terminal) of the operational amplifier **OP2** exceeds a plus input terminal voltage (voltage applied to the non-inverting input terminal) thereof and then the operation amplifier **OP2** outputs a low-level signal. Thereafter, the inverter **INV3** inverts the low-level signal and provides a high-level signal to turn on the transistor **Tr6.** The resistor **R17** is connected to the GND, and the transistor **Tr7** of the motor voltage control unit **24** receives at its base terminal (base) the voltage corresponding to the voltage-dividing ratio defined by the resistors **R17** to **R20.** Consequently, the transistor **Tr7** is turned on, and then the photo coupler (light emitting diode) **PC1** emits light. Thereby, a signal corresponding to the voltage-dividing ratio is fed back to the switching power supply unit **24a,** and the motor voltage control unit **24** applies the predetermined motor voltage Vb to the motor **4.** As a result, the predetermined motor voltage **Vb** which is corresponding to the above voltage-dividing ratio and is higher than the motor voltage **Va** is outputted.

Further, the resistor **R1** is pulled down, and then the duty ratio instruction voltage **Vdb** lower than the duty ratio instruction voltage **Vda** is outputted from the duty ratio instruction unit **2b** to the motor control unit **3.** Consequently, the motor control unit **3** implements the PWM control of the motor **4** based on the duty ratio **dcb** associated with the instruction voltage **Vdb.** Thereby, the pump **7** operates at an operating point **b.**

Moreover, the transistor **Tr1** is turned off, and the resistor **R6** is separated from the GND. The plus input terminal voltage of the operational amplifier **OP2** is increased depending on a time constant and a divided voltage given by the resistors **R9** and **R10** and the capacitor **C1.** In this situation, the plus input terminal voltage of the operational amplifier **OP2** becomes the threshold bL defining the lower limit of the current variation range **Wb.**

Next, when the valve **Bc** is opened, the operational amplifier **OP3** outputs a low-level signal. Consequently, the transistor **Tr5** is turned on and thus the resistor **R16** is connected to the GND. The voltage-dividing ratio of the voltage applied to the base terminal of the transistor **Tr7** of the motor voltage control unit **24** is decreased, and therefore the motor voltage control unit **24** generates the motor voltage **Vc** higher than the motor voltage **Vb** and applies the generated motor voltage **Vc** to the motor 4.

Further, the resistor **R2** is also pulled down, and then the duty ratio instruction voltage **Vdc** lower than the duty ratio instruction voltage **Vdb** is outputted to the motor control unit **3.** Consequently, the motor control unit **3** implements the PWM control of the motor **4** based on the duty ratio **dcc** associated with the duty ratio instruction voltage **Vdc.**

In brief, as shown in FIG. 5, the pump **7** moves from the operating point **b** to an operating point **c** and operates at the operating point **c.**

Thereafter, when the valve **Bd** is opened, the operational amplifier **OP4** outputs a low-level signal. Consequently, the transistor **Tr4** is turned on and thus the resistor **R15** is connected to the GND. The voltage-dividing ratio of the voltage applied to the base terminal of the transistor **Tr7** of the motor voltage control unit **24** is decreased, and therefore the motor voltage control unit **24** generates the motor voltage **Vd** higher than the motor voltage **Vc** and applies the generated motor voltage **Vd** to the motor **4.**

Further, the resistor **R3** is also pulled down, and then the duty ratio instruction voltage **Vdd** lower than the duty ratio instruction voltage **Vdc** is outputted to the motor control unit **3.** Consequently, the motor control unit **3** implements the PWM control of the motor **4** based on the duty ratio **dcd** associated with the duty ratio instruction voltage **Vdd.**

In brief, as shown in FIG. 5, the pump **7** moves from the operating point c to an operating point **d** and operates at the operating point **d.**

The operational amplifier **OP4** outputs the low-level signal, and the transistor **Tr3** is turned off, and the resistor **R8** is separated from the GND. The plus input terminal voltage of the operational amplifier **OP4** is increased depending on a time constant and a divided voltage given by the resistors **R11** and **R12** and the capacitor **C2.** In this situation, the plus input terminal voltage of the operational amplifier **OP4** becomes the threshold **dL** defining the lower limit of the current variation range **Wd.**

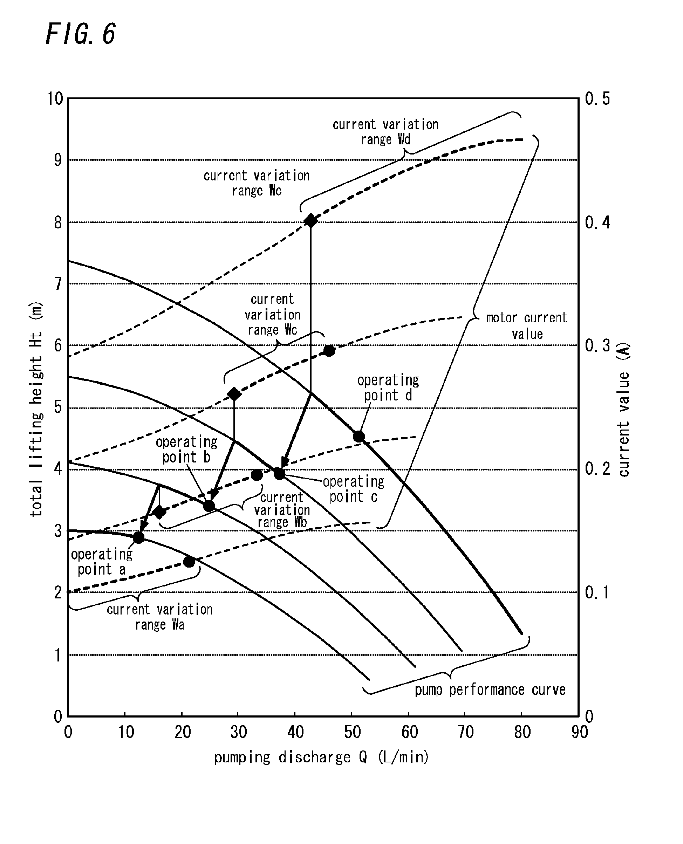

In the following explanation, an initial condition is defied as a condition where all the valves **Ba** to **Bd** are opened and the pump **7** operates at the operating point **d.** First, the valve **Bd** is closed. The pipe resistance is varied when the valve **Bd** is closed. Thus, as shown in FIG. 6, the motor current **Im** reaches the lower limit of the current variation range **Wd.** The output voltage of the operational amplifier **OP1** is decreased and therefore the minus input terminal voltage of the operational amplifier **OP4** becomes less than the plus input terminal voltage thereof and then the operation amplifier **OP4** outputs a high-level signal. Thereafter, the inverter **INV1** inverts the high-level signal and provides a low-level signal to turn off the transistor **Tr4.** The resistor **R15** is connected to the GND, and the transistor **Tr7** of the motor voltage control unit **24** receives at its base terminal the voltage corresponding to the voltage-dividing ratio defined by the resistors **R16** to **R20.**

Thereby, a signal corresponding to the voltage-dividing ratio is fed back to the switching power supply unit **24a,** and the motor voltage control unit **24** applies the predetermined motor voltage **Vc** to the motor **4.** As a result, the predetermined motor voltage **Vc** which is corresponding to the above voltage-dividing ratio and is lower than the motor voltage **Vd** is outputted.

Further, the resistor **R3** is pulled up, and then the duty ratio instruction voltage **Vdc** higher than the duty ratio instruction voltage **Vdd** is outputted from the duty ratio instruction unit **2b** to the motor control unit **3.** Consequently, the motor control unit **3** implements the PWM control of the motor **4** based on the duty ratio **dcc** associated with the duty ratio instruction voltage **Vdc.** Thereby, the pump 7 moves to and operates at the operating point c.

Moreover, the transistor **Tr3** is turned on, and the resistor **R8** is connected to the GND. The plus input terminal voltage of the operational amplifier **OP4** is decreased depending on a time constant and a divided voltage given by the resistors **R8, R11** and **R12** and the capacitor **C2.** In this situation, the plus input terminal voltage of the operational amplifier **OP4** becomes the threshold **cH** defining the upper limit of the current variation range **Wc.**

Next, when the valve **Bc** is closed, the operational amplifier **OP3** outputs a high-level signal. Consequently, the transistor **Tr5** is turned off and thus the resistor **R16** is separated from the GND. The voltage-dividing ratio of the voltage applied to the base terminal of the transistor **Tr7** of the motor voltage control unit **24** is increased, and therefore the motor voltage control unit **24** generates the motor voltage **Vb** lower than the motor voltage **Vc** and applies the generated motor voltage **Vb** to the motor **4.**

Simultaneously, the resistor **R2** is also pulled up, and then the duty ratio instruction voltage **Vdb** higher than the duty ratio instruction voltage **Vdc** is outputted to the motor control unit **3.** Consequently, the motor control unit **3** implements the PWM control of the motor **4** based on the duty ratio **dcb** associated with the duty ratio instruction voltage **Vdb.**

Next, when the valve **Bb** is closed, the operational amplifier **OP2** outputs a high-level signal. Consequently, the transistor **Tr6** is turned off and thus the resistor **R17** is separated from the GND. The voltage-dividing ratio of the voltage applied to the base terminal of the transistor **Tr7** of the motor voltage control unit **24** is increased, and therefore the motor voltage control unit **24** generates the motor voltage **Va** lower than the motor voltage **Vb** and applies the generated motor voltage **Va** to the motor **4.**

Simultaneously, the resistor **R1** is also pulled up, and then the duty ratio instruction voltage **Vda** higher than the duty ratio instruction voltage **Vdb** is outputted to the motor control unit **3.** Consequently, the motor control unit **3** implements the PWM control of the motor **4** based on the duty ratio dca associated with the duty ratio instruction voltage **Vda.**

As explained in the above, the pump device **70** of the present embodiment is a pump device interposed in a circulation path with a predetermined pipe resistance and configured to circulate a liquid through the circulation path. The pump device **70** includes the motor voltage control unit **24,** the motor control unit **3,** the pipe resistance detection unit **1,** the motor voltage instruction unit **2a,** and the duty ratio instruction unit **2b.** The motor voltage control unit **24** is configured to control a voltage of the motor **4** for driving the pump. The motor control unit **3** is configured to perform the PWM control of the motor **4.** The pipe resistance detection unit **1** is configured to measure a pipe resistance of the circulation path. The motor voltage instruction unit **2a** is configured to output one of prescribed output signals respectively associated with the multiple predetermined pipe resistances, and is configured to designate the output signal corresponding to the pipe resistance measured by the pipe resistance detection unit 1 to the motor voltage control unit **24.** The duty ratio instruction unit **2b** is configured to output one of prescribed duty ratios respectively associated with the multiple predetermined pipe resistances, and is configured to designate the duty ratio corresponding to the pipe resistance measured by the pipe resistance detection unit **1.** The motor voltage control unit **24** is configured to apply the motor voltage designated by the motor voltage instruction unit **2a** to the motor **4.** The motor control unit **3** is configured to drive the motor **4** with the duty ratio designated by the duty ratio instruction unit **2b.**

In other words, the pump device **70** of the present embodiment includes the pump mechanism **7** configured to move a fluid through the pipe, the motor **4** configured to drive the pump mechanism **7,** and the motor control device **10** configured to implement the PWM control of the motor **4.**

The motor control device **10** includes the motor driving unit **11** and the pipe resistance detection unit **1.** The motor driving unit **11** is configured to output a series of pulses to the motor **4** designed to drive the pump mechanism **7** for moving a fluid through the pipe so as to implement the PWM control of the motor **4.** The pipe resistance detection unit **1** is configured to measure a pipe resistance of the pipe. The motor driving unit **11** includes the motor voltage control unit **24,** the motor control unit **3,** the motor voltage instruction unit **2a,** and the duty ratio instruction unit **2b.** The motor voltage control unit **24** is configured to control a voltage of the series of pulses. The motor control unit **3** is configured to control a duty ratio of the series of pulses. The motor voltage instruction unit **2a** has a plurality of first instruction values respectively associated with a plurality of first pipe resistances different from each other. The motor voltage instruction unit **2a** is configured to select the first pipe resistance corresponding to the pipe resistance measured by the pipe resistance detection unit **1** from the plurality of the first pipe resistances and output the first instruction value corresponding to the selected first pipe resistance to the motor voltage control unit **24.** The duty ratio instruction unit **2b** has a plurality of second instruction values respectively associated with a plurality of second pipe resistances different from each other. The duty ratio instruction unit **2b** is configured to select the second pipe resistance corresponding to the pipe resistance measured by the pipe resistance detection unit **1** from the plurality of the second pipe resistances and output the second instruction value corresponding to the selected second pipe resistance to the motor control unit **3.** The motor voltage control unit **24** is configured to adjust the voltage of the series of pulses to a value corresponding to the first instruction value received from the motor voltage instruction unit **2a.** The motor control unit **3** is configured to adjust the duty ratio of the series of pulses to a value corresponding to the second instruction value received from the duty ratio instruction unit **2b.**

Further, in the pump device **70,** when the pipe resistance measured by the pipe resistance detection unit **1** is out of a predetermined range, the motor voltage instruction unit **2a** changes the output signal and the duty ratio instruction unit **2b** changes the duty ratio designated.

In other words, in the motor control device **10** of the present embodiment, the motor voltage instruction unit **2a** has a plurality of first pipe resistance ranges respectively associated with the plurality of the first pipe resistances. The motor voltage instruction unit **2a** is configured to select the first pipe resistance corresponding to the pipe resistance measured by the pipe resistance detection unit **1** from the plurality of the first pipe resistances on the basis of which one of the plurality of the first pipe resistance ranges includes the pipe resistance measured by the pipe resistance detection unit **1.**

Especially, in the motor control device **10** of the present embodiment, the motor voltage instruction unit **2a** includes the first judging circuit **21** configured to judge which one of the plurality of the first pipe resistance ranges includes the pipe resistance measured by the pipe resistance detection unit **1.** The first judging circuit **21** is constituted by the plurality of the first comparison circuits **21a, 21b,** and **21c** respectively configured to compare the pipe resistance measured by the pipe resistance detection unit **1** with a threshold defining the first pipe resistance range.

Further, in the motor control device **10** of the present embodiment, the duty ratio instruction unit **2b** has a plurality of second pipe resistance ranges respectively associated with the plurality of the second pipe resistances. The duty ratio instruction unit **2b** is configured to select the second pipe resistance corresponding to the pipe resistance measured by the pipe resistance detection unit **1** from the plurality of the second pipe resistances on the basis of which one of the plurality of the second pipe resistance ranges includes the pipe resistance measured by the pipe resistance detection unit **1.**

Especially, in the motor control device **10** of the present embodiment, the duty ratio instruction unit **2b** includes the second judging circuit **21** configured to judge which one of the plurality of the second pipe resistance ranges includes the pipe resistance measured by the pipe resistance detection unit. The second judging circuit **21** is constituted by the plurality of the second comparison circuits **21a, 21b,** and **21c** respectively configured to compare the pipe resistance measured by the pipe resistance detection unit with a threshold defining the second pipe resistance range.

The pump device **70** (the motor control device **10)** of the present embodiment explained in the above implements the PWM control of the motor **4** with the predetermined voltage and the duty ratio associated with (corresponding to) the prescribed pipe resistance. When the pipe resistance is known, controlling the pump output in accordance with a flow rate with suppressing an excess pressure loss can be implemented by use of a simple configuration for voltage setting and duty ratio setting. It is possible to propose the downsized pump device fabricated at lowered cost and operating with lowered consumption energy.

Besides, the liquid circulation device in accordance with the present embodiment includes the aforementioned pump device **70.** In brief, the liquid circulation device includes the pipes **ca, cb, cc,** and **cd** designed to constitute a circulation path, and the pump device **70.**

### (SECOND EMBODIMENT)

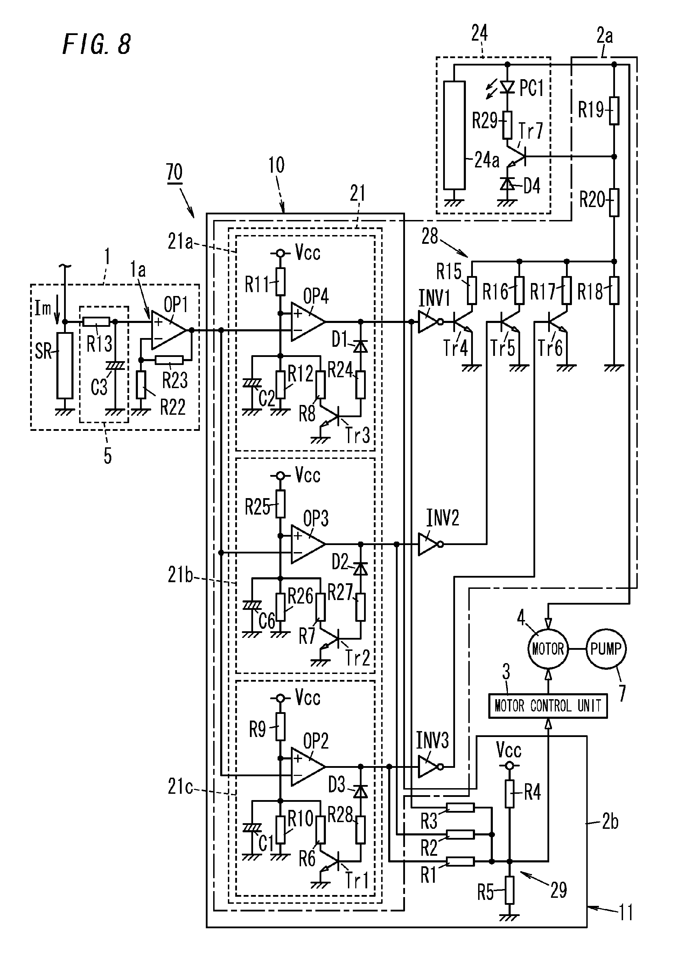

FIG. 8 shows the pump device **70** (the motor control device **10)** of the present embodiment. The present embodiment is different from the first embodiment in that the pipe resistance detection unit **1** acting as the current detection unit is provided with a current smoothing circuit **5.**

The pipe resistance detection unit **1** of the present embodiment includes the current measurement circuit (the shunt resistor **SR)** configured to measure the current **Im** flowing through the motor **4,** and is configured to output, as the measured pipe resistance, the current **Im** measured by the current measurement circuit. Further, the pipe resistance detection unit **1** includes the amplification circuit **1a** configured to amplify the output of the current measurement circuit. Moreover, the pipe resistance detection unit **1** includes the current smoothing circuit **5** configured to smooth the current **Im** flowing through the motor **4.**

For example, the current smoothing circuit **5** is constituted by an RC circuit interposed between the shunt resistor **SR** and the operational amplifier **OP1.** The current smoothing circuit 5 includes a resistor **R13** and a capacitor **C3.** The resistor **R13** is interposed between a terminal (high-potential side terminal) of the shunt resistor **SR** and the non-inverting input terminal of the operational amplifier **OP1.** The capacitor **C3** is interposed between a connection point of the resistor **R13** and the operational amplifier **OP1** and the ground (GND).

The current smoothing circuit **5** smooths a voltage across the shunt resistor **SR** with a predetermined time constant. The smoothed shunt voltage (voltage across the shunt resistor **SR)** is amplified by the operational amplifier **OP1,** and then is outputted to the motor voltage instruction unit **2a** and the duty ratio instruction unit **2b.**

When a voltage converted from an inrush current caused by activating the motor **4,** a rapid increase in the motor current **Im** caused by rapidly opening at least one of the valves **Ba** to **Bb,** or a rapid increase in the motor current **Im** caused by increasing the duty ratio is inputted into the common circuit **21,** a voltage higher than all the plus input terminal voltages of the respective operational amplifiers **OP2** to **OP4** of the common circuit **21** may be applied to the minus input terminals of the respective operational amplifiers **OP2** to **OP4.** In this situation, all the operational amplifiers **OP2** to **OP4** are turned off simultaneously, and therefore the motor voltage **Vd** is applied to the motor **4** and the duty ratio instruction voltage **Vdd** is outputted. Thus, a problem that the PWM control of the motor **4** is implemented based on the duty ratio **dcd** designated by the instruction voltage **Vdd** irrespective of the actual pipe resistance may arise.

In the pump device **70** of the present embodiment, the pipe resistance detection unit **1** is defined as a current detection unit designed to measure the motor current **Im,** and the current detection unit includes the current smoothing circuit **5.**

In other words, in the pump device **70** (the motor control device **10)** of the present embodiment, the pipe resistance detection unit **1** includes the current measurement circuit (the shunt resistor **SR)** configured to measure the current **Im** flowing through the motor **4,** and is configured to output, as the measured pipe resistance, the current **Im** measured by the current measurement circuit. Further, the pipe resistance detection unit **1** includes the current smoothing circuit **5** configured to smooth the current **Im** flowing through the motor **4.**

According to the present embodiment, with providing the current smoothing circuit **5** with the time constant defined by the resistor **R13** and the capacitor **C3,** it is possible to solve the above problem.

The predetermined time derived from the time constant is selected longer than duration time of an inrush current likely to occur at the time of activating the motor, of opening the valve, and of changing the duty ratio, and is preferably about double of the duration time. When the time constant is too long, the changing operation of the motor voltage and the duty ratio is likely to be delayed from the change in the motor current.

### (THIRD EMBODIMENT)

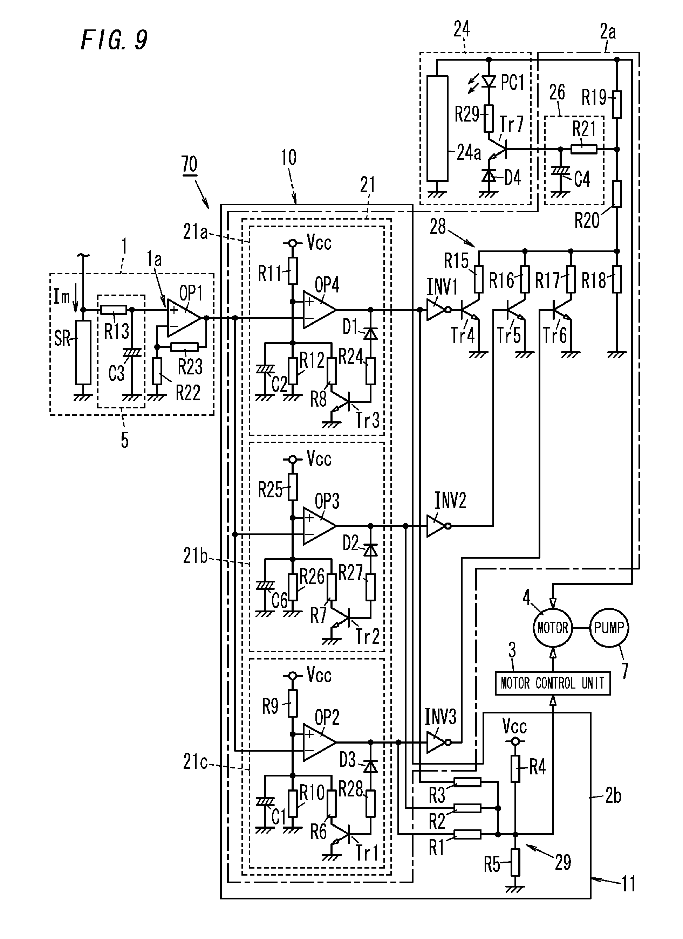

FIG. 9 shows the motor control device **10** (the pump device **70)** of the present embodiment. In the present embodiment, the output signal from the motor voltage instruction unit **2a** is inputted into the motor voltage control unit **24** via a time constant circuit (first time constant circuit) **26.**

For example, the time constant circuit **26** is constituted by an **RC** circuit interposed between a connection point of the resistors **R19** and **R20** and the base (base terminal) of the transistor **Tr7.** The time constant circuit **26** includes a resistor **R21** and a capacitor **C4.** The resistor **R21** is interposed between the connection point of the resistors **R19** and **R20** and the base (base terminal) of the transistor **Tr7.** The capacitor **C4** is interposed between a connection point of the resistor **R21** and the transistor **Tr7** and the ground (GND).

In brief, in the present embodiment, a voltage defined by the voltage-dividing ratio of the resistors **R15** to **R20** is smoothed with a predetermined time constant defined by the resistors **R15** to **R20** and **R21** and the capacitor **C4,** and then is applied to the base terminal of the transistor **Tr7** of the motor voltage control unit **24.**

In the aforementioned pump device of the present embodiment, the motor voltage instruction unit **2a** is configured to its output signal to the motor voltage control unit **24** via the time constant circuit **26.**

In other words, in the motor control device **10** of the present embodiment, the motor voltage instruction unit **2a** includes the output circuit (first output circuit) **28** configured to output an electric signal indicative of the first instruction value to the motor voltage control unit **24,** and the first time constant circuit **26** configured to smooth the electric signal outputted from the first output circuit **28.**

According to the present embodiment, time for a change in the voltage caused by a change in the voltage-dividing ratio defined by the resistors **R15** to **R20** is prolonged in accordance with a designated time constant. Consequently, a rapid change in the motor voltage due to the motor voltage control can be suppressed, and therefore it is possible to reduce vibrations and noises which would otherwise occur when the motor voltage is changed.

### (FOURTH EMBODIMENT)

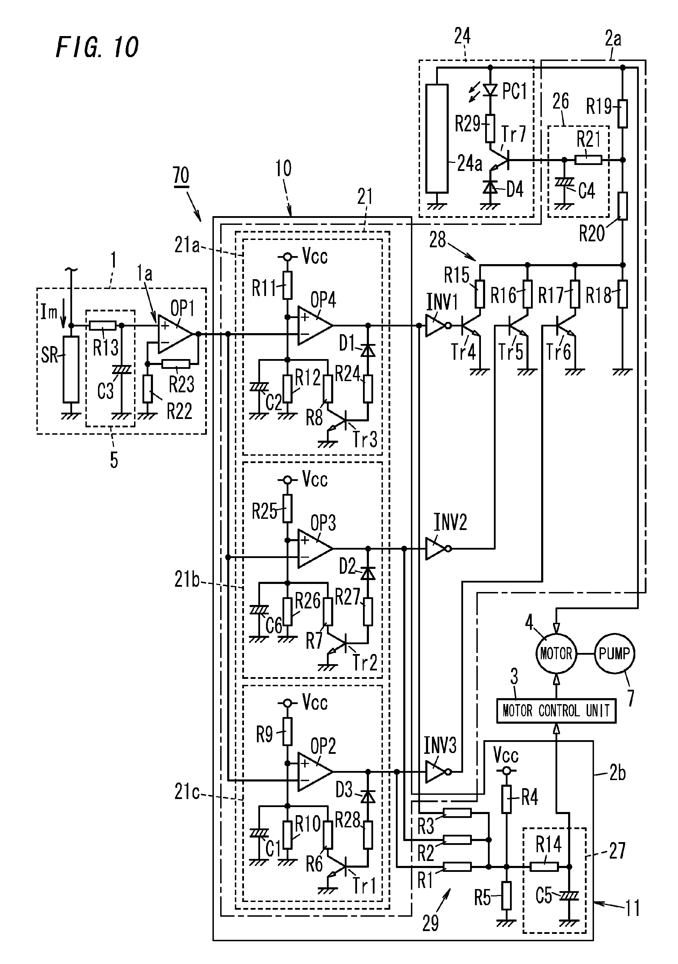

FIG. 10 shows the motor control device **10** (the pump device **70)** of the present embodiment. The present embodiment includes, in addition to the time constant circuit (first time constant circuit) **26,** a time constant circuit (second time constant circuit) **27** provided to the duty ratio instruction unit **2b,** and outputs the duty ratio instruction voltage smoothed by the time constant circuit **27** to the motor control unit **3.**

For example, the time constant circuit **27** is constituted by an RC circuit interposed between a connection point of the resistors **R4** and **R5** and the motor control unit **3.** The time constant circuit **27** includes a resistor **R14** and a capacitor **C5.** The resistor **R14** is interposed between the connection point of the resistors **R4** and **R5** and the motor control unit **3.** The capacitor **C5** is interposed between a connection point of the resistor **R14** and the motor control unit **3** and the ground (GND).

In brief, in the present embodiment, a voltage defined by the voltage-dividing ratio of the resistors **R1** to **R5** is smoothed with a predetermined time constant defined by the resistors **R1** to **R5** and **R14** and the capacitor **C5,** and then is outputted to the motor control unit **3.**

In the aforementioned pump device of the present embodiment, the duty ratio instruction unit **2b** is configured to output its output indicative of the duty ratio to the motor control unit **3** via the time constant circuit **27.**

In other words, in the motor control device **10** of the present embodiment, the duty ratio instruction unit **2b** includes the output circuit (second output circuit) **29** configured to output an electric signal indicative of the second instruction value to the motor control unit **3,** and the second time constant circuit **27** configured to smooth the electric signal outputted from the second output circuit **29.**

Since time for a change in the duty ratio instruction voltage is prolonged in accordance with a designated time constant, a rapid change in the duty ratio of the PWM control can be suppressed, and therefore it is possible to reduce vibrations and noises which would otherwise occur when the motor is controlled.

In the motor control device **10** (the pump device **70)** of any one of the first to the fourth embodiments as mentioned in the above, the pipe channel is changed due to opening and/or closing at least one of the valves **Ba** to **Bd** respectively provided to the multiple prescribed pipe channels **ca** to **cd.** Since the pipe resistances of the respective pipe channels **ca** to **cd** are known, the motor voltages and the duty ratios appropriate to the respective pipe channels are preliminarily selected. Thus, the PWM control of the motor **4** is implemented based on the motor voltage and the duty ratio which are preliminarily selected. Consequently, it is possible to operate the pump at its output appropriate to the actual pipe resistance without using an expensive processing circuit. In addition, the excess pressure loss can be suppressed. Thus, it is enabled to propose the pump device and the liquid circulation device which are downsized and are fabricated at lowered cost and operate with lowered consumption energy.

## Claims

1. A motor control device comprising:
a motor driving unit (11) configured to output a series of pulses to a motor (4) designed to drive a pump mechanism (7) for moving a fluid through a pipe (ca, cb, cc, cd)so as to implement PWM control of the motor (4); and
a pipe resistance detection unit (1) configured to measure a pipe resistance of the pipe (ca, cb, cc, cd),
wherein said motor driving unit (11) includes:
a motor voltage control unit (24) configured to control a voltage of the series of pulses;
a motor control unit (3) configured to control a duty ratio of the series of pulses;
a motor voltage instruction unit (2a) having a plurality of first instruction values respectively associated with to a plurality of first pipe resistances different from each other, said motor voltage instruction unit (2a) being configured to select the first pipe resistance corresponding to the pipe resistance measured by said pipe resistance detection unit (1) from the plurality of the first pipe resistances and output the first instruction value corresponding to the selected first pipe resistance to said motor voltage control unit (24); and
a duty ratio instruction unit (2b)having a plurality of second instruction values respectively associated with a plurality of second pipe resistances different from each other, said duty ratio instruction unit (2b) being configured to select the second pipe resistance corresponding to the pipe resistance measured by said pipe resistance detection unit (1) from the plurality of the second pipe resistances and output the second instruction value corresponding to the selected second pipe resistance to said motor control unit (3), and
said motor voltage control unit (24) is configured to adjust the voltage of the series of pulses to a value corresponding to the first instruction value received from said motor voltage instruction unit (2a), and
said motor control unit (3) is configured to adjust the duty ratio of the series of pulses to a value corresponding to the second instruction value received from said duty ratio instruction unit (2b).

2. A motor control device as set forth in claim 1, wherein
said motor voltage instruction unit (2a) has a plurality of first pipe resistance ranges respectively associated with the plurality of the first pipe resistances, and
said motor voltage instruction unit (2a) is configured to select the first pipe resistance corresponding to the pipe resistance measured by said pipe resistance detection unit (1) from the plurality of the first pipe resistances on the basis of which one of the plurality of the first pipe resistance ranges includes the pipe resistance measured by said pipe resistance detection unit (1).

3. A motor control device as set forth in claim 2, wherein
said motor voltage instruction unit (2a) includes a first judging circuit (21) configured to judge which one of the plurality of the first pipe resistance ranges includes the pipe resistance measured by said pipe resistance detection unit (1), and
said first judging circuit (21) is constituted by a plurality of first comparison circuits (21a, 21b, 21c) respectively configured to compare the pipe resistance measured by said pipe resistance detection unit (1) with a threshold defining the first pipe resistance range.

4. A motor control device as set forth in any one of claims 1 to 3, wherein
said duty ratio instruction unit (2b) has a plurality of second pipe resistance ranges respectively associated with the plurality of the second pipe resistances, and
said duty ratio instruction unit (2b) is configured to select the second pipe resistance corresponding to the pipe resistance measured by said pipe resistance detection unit (1) from the plurality of the second pipe resistances on the basis of which one of the plurality of the second pipe resistance ranges includes the pipe resistance measured by said pipe resistance detection unit (1).

5. A motor control device as set forth in claim 4, wherein
said duty ratio instruction unit (2b) includes a second judging circuit (21) configured to judge which one of the plurality of the second pipe resistance ranges includes the pipe resistance measured by said pipe resistance detection unit (1), and
said second judging circuit (2b) is constituted by a plurality of second comparison circuits (21a, 21b, 21c) respectively configured to compare the pipe resistance measured by said pipe resistance detection unit (1) with a threshold defining the second pipe resistance range.

6. A motor control device as set forth in any one of claims 1 to 5, wherein
said pipe resistance detection unit (1) includes a current measurement circuit (SR) configured to measure a current flowing through the motor (4), and is configured to output, as the measured pipe resistance, the current measured by said current measurement circuit (SR).

7. A motor control device as set forth in claim 6, wherein
said pipe resistance detection unit (1) includes a current smoothing circuit (5) configured to smooth a current flowing through the motor (4).

8. A motor control device as set forth in any one of claims 1 to 7, wherein
said motor voltage instruction unit (2a) includes:
a first output circuit (28) configured to output an electric signal indicative of the first instruction value to said motor voltage control unit (24); and
a first time constant circuit (26) configured to smooth the electric signal outputted from said first output circuit (28).

9. A motor control device as set forth in any one of claims 1 to 8, wherein
said duty ratio instruction unit (2b) includes:
a second output circuit (29) configured to output an electric signal indicative of the second instruction value to said motor control unit (3); and
a second time constant circuit (27) configured to smooth the electric signal outputted from said second output circuit (29).

10. A pump device comprising:
a pump mechanism (7) configured to move a fluid through a pipe (ca, cb, cc, cd);
a motor (4) configured to drive said pump mechanism (7); and
a motor control device (10) defined by any one of claims 1 to 9.

11. A liquid circulation device comprising:
a pipe (ca, cb, cc, ce) designed to constitute a circulation path; and
a pump device (70) defined by claim 10.
